# EUROPÄISCHE PATENTSCHRIFT

(11) **EP 1 245 141 B1**
(45) Veröffentlichungstag und Bekanntmachung des Hinweises auf die Patenterteilung: **24.05.2006**
(21) Anmeldenummer: 02006265.9
(22) Anmeldetag: 20.03.2002
(51) Int. Cl.: A01D 34/76

(54) **Arbeitsgerät mit schwenkbaren Arbeitseinheiten**
Working apparatus with pivotable working units
Appareil de travail à unités de travail pivotables

(30) Priorität: 28.03.2001 US 819314
(43) Veröffentlichungstag der Anmeldung: 02.10.2002
(73) Patentinhaber: DEERE & COMPANY, Moline, Illinois 61265-8098 (US)
(72) Erfinder: Schmidt, Michael Todd, Holly Springs, NC 27540 (US)
(74) Vertreter: Magin, Ludwig Bernhard

(56) Entgegenhaltungen:
- DE-A- 1 916 430
- DE-A- 3 423 410
- NL-A- 7 316 392
- US-A- 3 208 207
- US-A- 5 177 942

## Beschreibung

Die Erfindung betrifft ein Arbeitsgerät mit wenigstens zwei sich auf dem Untergrund abstützenden Arbeitseinheiten, welche um Schwenkachsen schwenkbar miteinander verbunden sind und welche jeweils wenigstens eine Arbeitseinheit aufweisen, und mit einem Zugmitteltrieb zum Antrieb der Arbeitsmittel mit mehreren um Drehachsen drehbaren Zugmittelscheiben, um welche wenigstens ein endloses Zugmittel geführt wird.

Arbeitsgeräte bzw. Mähwerke weisen häufig mehrere Arbeitsmittel bzw. Schneidmesser auf, welche in getrennten Gehäusen oder Arbeitseinheiten angeordnet sind, welche die Arbeitsmittel umschließen. Diese Arbeitseinheiten sind oft über Scharniere miteinander verbunden, um es den Arbeitseinheiten zu erlauben unabhängig voneinander und gegeneinander zu verschwenken, wenn sich das Arbeitsgerät über den Untergrund bewegt. Solche Arbeitsgeräte, welche solche schwenkbar verbundenen Arbeitseinheiten aufweisen, werden oftmals auf im Wesentlichen unebenem Untergrund eingesetzt. Entsprechend erlaubt die schwenkbare Verbindung der Arbeitseinheiten, dass auch ein solcher Untergrund gleichmäßig bearbeitet wird, da jede Arbeitseinheit in der Lage ist, der Kontur des Bodens in einer voreingestellten Schneidhöhe zu folgen.

Ein üblicher Weg zum Antrieb der Arbeitsmittel in den Arbeitseinheiten besteht darin, einen Zugmitteltrieb einzusetzen, welcher Zugmittelscheiben und Zugmittel aufweist, welche sich zwischen den Arbeitseinheiten erstrecken. Antriebskraft für die Arbeitseinheiten wird durch eine Antriebswelle zur Verfügung gestellt, welche mit einer Zapfwelle eines Geräts oder Fahrzeugs verbindbar ist. Die Antriebswelle überträgt die Antriebskraft zu einem zentralen oder Hauptgetriebe auf der zentralen Arbeitseinheit. Dieses Getriebe wiederum treibt eine erste Zugmittelscheibe und das Arbeitsmittel der zentralen Arbeitseinheit an. Die Antriebskraft dieser Zugmittelscheibe wird durch endlose Zugmittel oder Riemen zu einer oder mehreren weiteren Zugmittelscheiben übertragen, welche Arbeitsmittel, die angrenzenden Arbeitseinheiten angeordnet sind, antreiben.

Bei bekannten Ausführungsformen sind diese Zugmittelscheiben und Zugmittel derart angeordnet, dass sie in einer Ebene rotieren, welche zumindest im Wesentlichen zu der Oberfläche der Arbeitseinheiten parallel angeordnet ist. Eine solche Anordnung kann beispielsweise der US-A-5,177,942 entnommen werden. Da jede Zugmittelscheibe um eine eigene sich im Wesentlichen in vertikaler Richtung erstreckende Achse rotiert, sind die Achsen der Zugmittelscheiben zumindest im Wesentlichen parallel angeordnet, wenn die Arbeitseinheiten auf einem im Wesentlichen ebenen Untergrund betrieben werden. Bewegen sich die Mäheinheiten bzw. Arbeitseinheiten aber über unebenes Gelände, verschwenken sie, und die Achsen der Zugmittelscheiben sind nicht länger parallel angeordnet.

Wenn die Achsen der Zugmittelscheiben aufgrund des Verschwenkens der Arbeitseinheiten nicht länger parallel angeordnet sind, können die Zugmittel, welche um die Zugmittelscheiben geführt sind, nicht mehr ordnungsgemäß in die Nuten der Zugmittelscheiben ein- und austreten, ohne sich zu verlagern. Dadurch kann es zu einem erhöhten Verschleiß der Zugmittel und sogar dazu kommen, dass die Zugmittel ausfransen oder zerreißen, wenn die Arbeitseinheiten gegeneinander verschwenken. Ein derartiger Verschleiß kann auftreten, wenn die Zugmittel wiederholt verdreht und gebogen werden, wenn sie in V-förmige Nuten der Zugmittelscheiben ein- und austreten, wenn die entsprechende Arbeitseinheit verschwenkt. Entsprechend ist ein größerer Instandhaltungsaufwand notwendig, um die beschädigten Zugmittel zu reparieren und/oder zu ersetzen.

Das der Erfindung zugrunde liegende Problem wird darin gesehen, dass die Zugmittel bekannter Arbeitsgeräte, welche zum Antrieb ihrer Arbeitsmittel mit Zugmitteltrieben ausgestattet sind, einem erhöhten Verschleiß ausgesetzt sind, insbesondere wenn sie auf unebenem Untergrund betrieben werden.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Arbeitsgerät zur Verfügung gestellt, welches einen geringeren Zugmittelverschleiß aufweist, da das Zugmittel, auch wenn die Arbeitseinheiten des Arbeitsgeräts gegeneinander verschwenkt sind, nicht verdreht oder gebogen wird, da die Drehachsen der Zugmittelscheiben, um welche wenigstens ein Zugmittel geführt ist, zumindest im Wesentlichen parallel zu den Schwenkachsen, um welche die Arbeitseinheiten mit Bezug zueinander verschwenken können, angeordnet sind. Das Zugmittel überträgt Antriebskraft von einer antreibenden Zugmittelscheibe, welche vorzugsweise auf einer ersten bzw. zentralen Arbeitseinheit angeordnet ist, zu wenigstens einer angetriebenen Zugmittelscheibe auf einer angrenzenden Arbeitseinheit. Die durch das Zugmittel angetriebene Zugmittelscheibe ist mit einem Arbeitsmittel derart wirksam verbunden, dass dieses in Rotation versetzt wird. Bei dem Arbeitsmittel handelt es sich vorzugsweise um ein Schneidmesser, welches in einer zumindest im Wesentlichen horizontalen Ebene bzw. um eine zumindest im Wesentlichen vertikal ausgerichteten Achse rotiert. Es ist aber auch denkbar, dass es sich bei dem Arbeitsmittel um eine Mähspindel, eine Kehreinrichtung o.ä. Einrichtungen, insbesondere zur Rasen-, Garten- und Grundstückspflege handelt.

Zwischen der antreibenden und der angetriebenen Riemenscheibe können weitere Riemenscheiben vorgesehen sein, welche die Antriebskraft übertragen. Beispielsweise kann eine erste, weitere Zugmittelscheibe mit der antreibenden Zugmittelscheibe über ein erstes Zugmittel, und eine zweite weitere Zugmittelscheibe über ein zweites Zugmittel mit der angetriebenen Zugmittelscheibe in Verbindung stehen. Die weiteren Zugmittelscheiben sind derart verbunden, dass sie gemeinsam rotieren und so die Arbeitskraft übertragen können.

Die erste und zweite weiteren Zugmittelscheiben können auch in der Art einer Doppelriemenscheibe ausgebildet sein.

Besonders günstig ist es, wenn die weiteren Zugmittelscheiben bzw. ihre Drehachsen zumindest im Wesentlichen oberhalb der bzw. zumindest im Wesentlichen parallel zu den Schwenkachsen der schwenkbar verbundenen Arbeitseinheiten angeordnet sind. Dies unterstützt die Zugmittel darin gerade bzw. nicht verdreht oder gebogen in die Zugmittelscheiben bzw. deren Nuten ein- und wieder auszutreten.

Um die Drehachsen der Zugmittelscheiben auch bei einem Verschwenken der Arbeitseinheiten parallel bzw. gleich beabstandet zu halten, können die Zugmittelscheiben an Schwenkarmen angebracht sein, welche die Zugmittelscheiben und das Zugmittel in Abhängigkeit von der Bewegung bzw. dem Verschwenken der Arbeitseinheiten bewegen. Eine Bewegung der Schwenkarme in vertikaler Richtung erlaubt es jeder Zugmittelscheibe, zu ihrer angrenzend angeordneten Zugmittelscheibe koaxial angeordnet zu sein, so dass die Nuten der Zugmittelscheiben miteinander fluchten und so ein Verdrehen und/oder Biegen der um sie geführten bzw. geschlungenen Zugmittel vermieden wird.

Weiter werden die Zugmittelscheiben, wenn sie mit Bezug bzw. in Abhängigkeit zu-/voneinander bewegt werden, durch das Ein- und Austreten des Zugmittels nicht belastet oder verformt, da die Nuten, in welche das Zugmittel ein- und austritt, zumindest im Wesentlichen gleich ausgerichtet sind. Folglich weist das Zugmittel und die zugeordneten Zugmittelscheiben, auf denen es sich bewegt, eine erhöhte Lebensdauer auf, wodurch die Notwendigkeit häufiger Reparaturen und/oder eines Austauschs reduziert wird.

Darüber hinaus wird ein Zugmitteltrieb zur Verfügung gestellt, welcher die ursprüngliche Länge des Zugmittels, welches um die Zugmittelscheiben geschlungen bzw. geführt ist, zumindest im Wesentlichen aufrechterhält, wenn die Arbeitseinheiten wiederholt noch oben und unten geschwenkt werden. Ein Beibehalten dieser ursprünglichen Länge kann dadurch erzielt werden, dass die Schwenkarme zwei winklig angeordnete Bereiche festgelegter Länge aufweisen, welche miteinander verbunden sind. Eine Begrenzung dieser Bereiche auf eine feste Länge, hält den Abstand der Drehachsen angrenzender Zugmittelscheiben auf Dauer gleich. Somit wird eine Wahrscheinlichkeit eines Dehnens des Zugmittels, wenn die Arbeitseinheiten verschwenken, wesentlich verringert.

In der Zeichnung ist ein nachfolgend näher beschriebenes Ausführungsbeispiel der Erfindung dargestellt. Es zeigt:
- Fig. 1: eine Front- und Seitenansicht eines Arbeitsgeräts, das einen Zugmitteltrieb aufweist,
- Fig. 2: eine perspektivische Rück- und Seitenansicht des Arbeitsgeräts aus Fig. 1,
- Fig. 3: eine perspektivische Ansicht der Unterseite des Arbeitsgeräts entsprechend Fig. 1,
- Fig. 4: eine schematische perspektivische Front- und Seitenansicht des Zugmitteltriebs entsprechend Fig. 1,
- Fig. 5: eine schematische Rückansicht des Zugmitteltriebs, wenn sich das Arbeitsgerät auf einer ebenen Bodenoberfläche befindet,
- Fig. 6: eine schematische Rückansicht des Zugmitteltriebs, wenn sich das Arbeitsgerät auf einer unebenen Bodenoberfläche befindet und eine der Arbeitseinheiten hierdurch nach oben geschwenkt ist,
- Fig. 7: eine Rückansicht des Zugmitteltriebs, wenn sich das Arbeitsgerät auf einer unebenen Bodenoberfläche befindet und die andere der beiden Arbeitseinheiten nach oben geschwenkt ist,
- Fig. 8: eine schematische Frontansicht des Zugmitteltriebs aus Fig. 4,
- Fig. 8a: eine ebene schematische Ansicht der Erfindung, entsprechend Fig. 8,
- Fig. 9: eine schematische Frontansicht eines zum Stand der Technik gehörenden Mähwerks bzw. eines Arbeitsgeräts und ein Zugmitteltrieb, die die Verwindung illustriert, die zwischen den Zugmitteln auftritt, wenn eine solche Arbeitseinheit relativ zu ihrer angrenzenden und schwenkbar verbundenen Arbeitseinheit schwenkt.

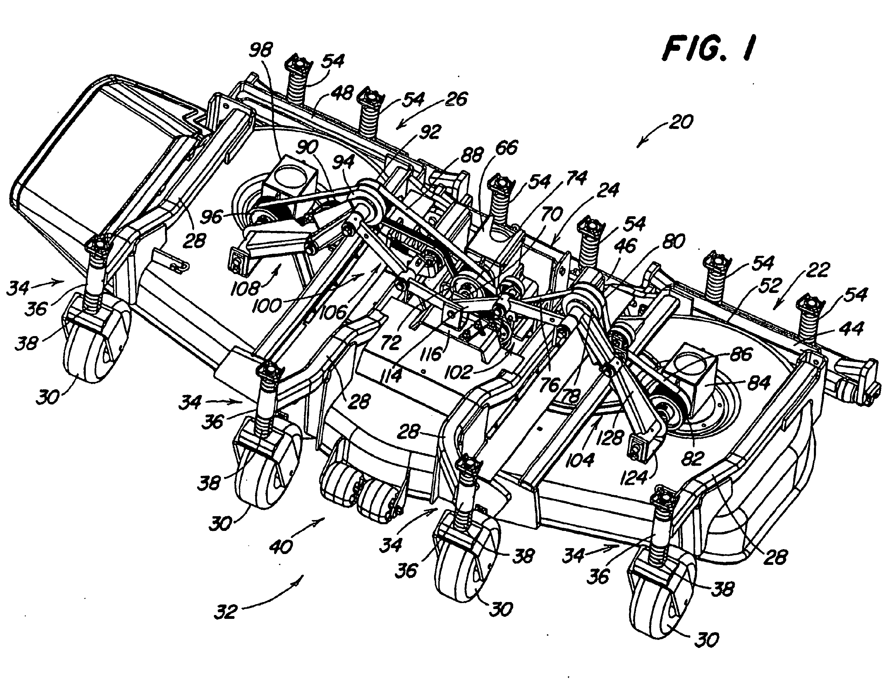

Mit Blick auf Figur 1 wird ein Mähwerk bzw. eine Arbeitsgerät 20 für ein Mähgerät bzw. ein Gerät zur Rasen-, Garten- und Grundstückspflege (nicht gezeigt) zur Verfügung gestellt, das eine erste Mäh- bzw. Arbeitseinheit 22, eine zweite Arbeitseinheit 24 und eine dritte Arbeitseinheit 26 aufweist. Die erste und die dritte Arbeitseinheit 22, 26 sind schwenkbar an der zweiten Arbeitseinheit 24 angebracht, um es der ersten und der dritten Arbeitseinheit zu erlauben, zu schwenken und so der Kontur einer unebenen Bodenoberfläche zu folgen. In Figur 1 wird darüber hinaus eine Mehrzahl von Radaufhängungen 28 dargestellt, die an der Oberseite des Arbeitsgeräts 20 angebracht sind. Jede Radaufhängung 28 weist ein am Boden angreifendes Führungs- bzw. Freilaufrad 30 auf, das mit dieser verbunden ist, um eine Vorderseite 32 des Arbeitsgeräts 20 abzustützen und über den Boden zu führen. Zwischen jeder Radaufhängung 28 und dem Freilaufrad 30 ist eine Höhenverstelleinrichtung 34 in Form eines Pfostens 36 vorgesehen, welche entfernbare Ringe 38 aufweist, um es einer Bedienungsperson zu erlauben, eine Schnitthöhe zu wählen. Weiterhin ist an der Vorderseite 32 des Arbeitsgeräts 20 ein Paar von Rädern 40 angebracht, die in üblicher Weise ein Einschneiden in den Boden verhindern.

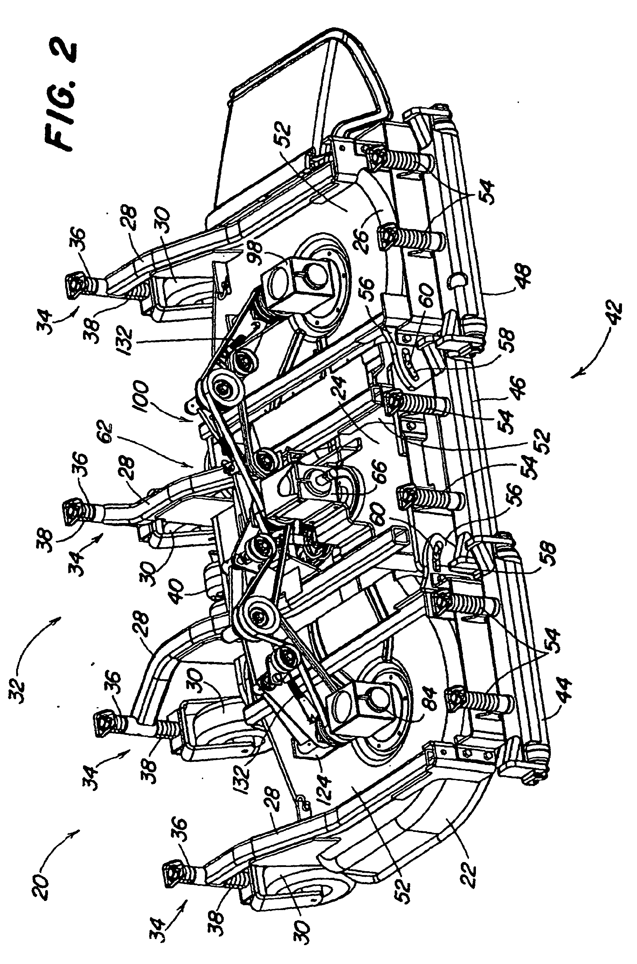

Entsprechend Figur 2 sind an der Rückseite 42 des Arbeitsgeräts 20 entsprechend eine erste, eine zweite und eine dritte Laufwalze bzw. Laufwalzenzusammenbauten 44, 46 und 48 angebracht. Jeder Laufwalzenzusammenbau 44, 46, 48 ist schwenkbar an seinem angrenzenden Laufwalzenzusammenbau angebracht und jeweils mit der ersten, zweiten bzw. dritten Arbeitseinheit 22, 24 bzw. 26 entsprechend verbunden, um die Rückseite 32 des Arbeitsgeräts 20 in einer gewünschten Höhe zu halten, wenn es über den Boden gelangt. Auf einer Oberseite jeder der Laufwalzenzusammenbauten 44, 46 und 48 ist ein Paar von Höheneinstellmitteln 54 befestigt, die in Aussehen und Funktion ähnlich aufgebaut sind wie die Höheneinstelleinrichtungen 34, um das Heck 42 des Arbeitsgeräts 20 auf der im Wesentlichen gleichen Schnitthöhe zu halten, die an seiner Vorderseite 32 eingestellt wurde.

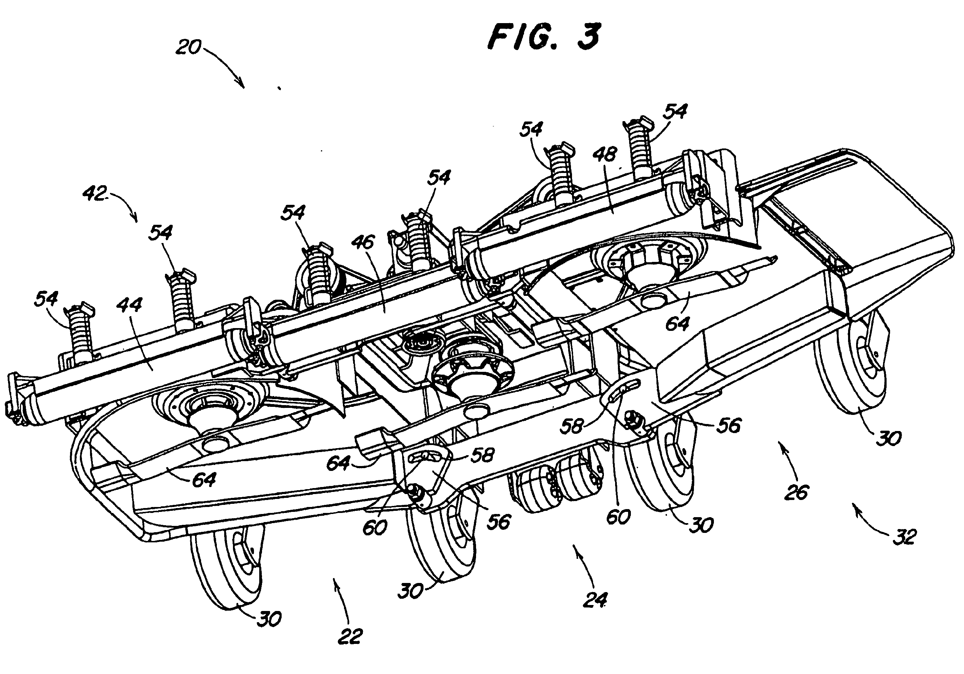

Wie es in den Figuren 2 und 3 dargestellt ist, ist eine Schwenkplatte 56 jeweils an der ersten und der dritten Arbeitseinheit 22 und 26, vorzugsweise durch Anschweißen, sowohl an der Frontseite 32 als auch an dem Heck 42 des Arbeitsgeräts 20 angebracht. Die Schwenkplatte 56 weist einen bogenförmigen Führungsschlitz 58 auf. Auf jeder Seite der zweiten oder mittleren Arbeitseinheit 24 ist ein Paar von Stiften 60 starr befestigt, die in die Führungsschlitze 58 der ersten und dritten Arbeitseinheit 22 und 26 passend eingreifen, um sich darin zu bewegen und die Bewegungsmöglichkeit der ersten und dritten Arbeitseinheit 22 und 26 in Bezug zur zweiten Arbeitseinheit 24 bestimmen. Der Umfang der Verschwenkung oder Verwindung der seitlichen Arbeitseinheiten 22 und 26 mit Bezug zu der mittleren Arbeitseinheit 24 wird durch eine Begrenzung der Bewegung des Stifts 60 innerhalb des Führungsschlitzes 58 vorzugsweise im Bereich von im Wesentlichen 0 bis plus 20 bzw. 0 bis minus 20 Grad bestimmt.

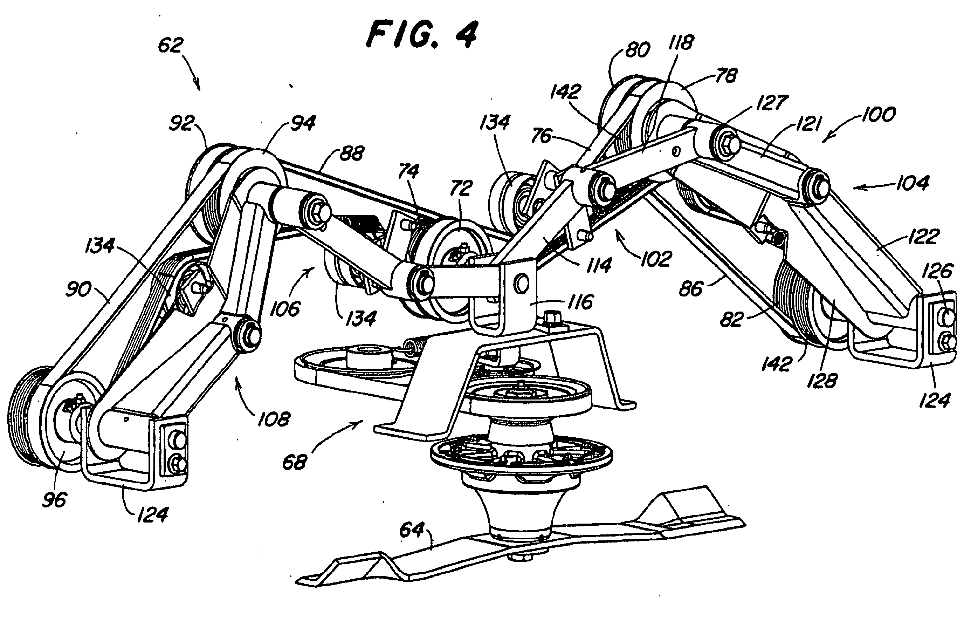

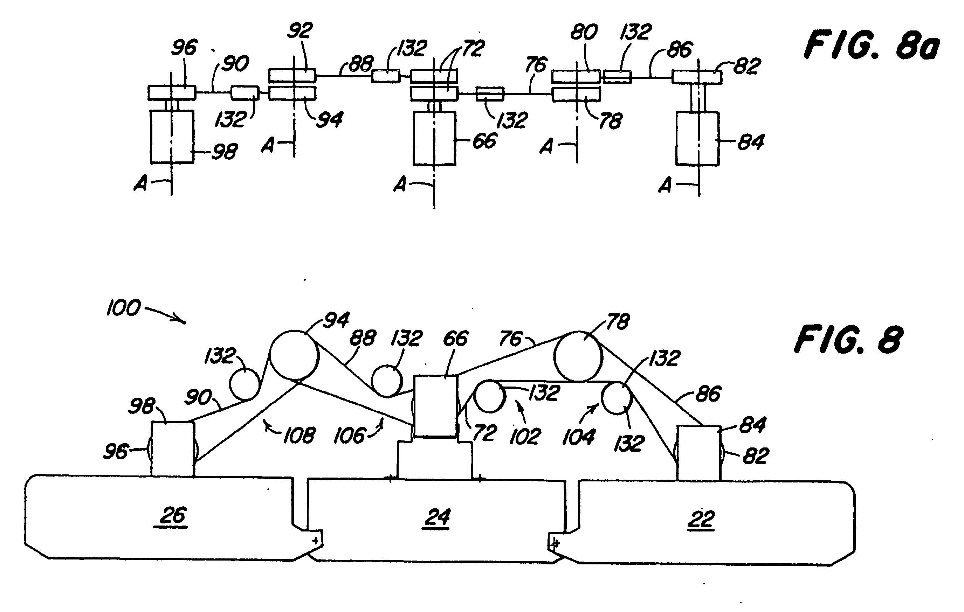

Wie es am besten in den Figuren 1 und 2 zu erkennen ist, ist ein Riemen- bzw. Zugmitteltrieb 62 an der Oberseite jeder der Arbeitseinheiten vorgesehen, um Kraft von der Zapfwelle (PTO) (nicht gezeigt) des Geräts zur Rasen-, Garten- und Grundstückspflege zu Schneidemessern bzw. Arbeitsmitteln 64, siehe Figur 3, zu übertragen, welche in jeder der Arbeitseinheiten 22, 24 und 26 angeordnet sind. Antriebskraft wird von der Zapfwelle, über ihre Verbindung mit einem zentralen oder Hauptgetriebegehäuse bzw. Getriebe 66 geliefert, welches auf der zweiten Arbeitseinheit 24 angebracht ist, wie es am besten in Figur 2 gezeigt wird. Das Getriebe 66 wiederum ist mit einer senkrechten Welle (nicht gezeigt) verbunden, die eine Doppelzugmittelscheibenanordnung 68 antreibt, vgl. Figur 4, um das Arbeitsmittel 64, das in der zweiten Arbeitseinheit untergebracht ist, in Rotation zu versetzen. Betrachtet man wieder Figur 1, so ist an einer gegenüberliegenden Seite des Getriebes 66 eine weitere Welle 70 vorgesehen, um eine erste Antriebszugmittelscheibe bzw. eine antreibende Zugmittelscheibe 72 anzubringen, die getrennt einen ersten an ihr angebrachten Riemen bzw. ein Zugmittel 76 bewegt, um Antriebskraft von der Zapfwelle an eine dritte Zugmittelscheibe 78 zu übertragen, welche eine vierte Zugmittelscheibe 80 in Rotation versetzt, die mit ihr starr verbunden ist. Die vierte Zugmittelscheibe 80 wird durch die Rotation der dritten Zugmittelscheibe 78 angetrieben, um Kraft über das erste Zugmittel 76, welcher um die erste antreibende Zugmittelscheibe 72 und die dritte Zugmittelscheibe 78 geführt ist, was insbesondere in den Figuren 4 und 8a zu erkennen ist, an das Arbeitsmittel 64 der ersten Arbeitseinheit zu übertragen. Von dieser vierten Zugmittelscheibe 80 wird dann die Antriebskraft auf eine zweite Zugmittelscheibe 82 übertragen, die an einem zweiten Getriebegehäuse bzw. Getriebe 84 angebracht ist und dieses antreibt, vgl. Figuren 1 und 8a, und welches an der ersten oder linken Arbeitseinheit 22 angebracht ist und verwendet wird, um das Arbeitsmittel 64 der Arbeitseinheit 22 über ein zweites Zugmittel 86 in Rotation zu versetzen, welches um die vierte und die zweite Zugmittelscheibe 80, 82 geführt ist. Die Antriebskraft für das Arbeitsmittel 64 der dritten Arbeitseinheit 26 wird von einem ähnlich aufgebauten Teil des Zugmitteltriebs 62 übertragen, der ein drittes und ein viertes Zugmittel 88, 90 aufweist, die mit einer fünften und einer sechsten Übertragungszugmittelscheibe bzw. Zugmittelscheibe 92, 94 zusammenarbeiten, um eine Zugmittelscheibe 96 anzutreiben, die mit einem dritten Getriebegehäuse bzw. Getriebe 98, welches auf der dritten Arbeitseinheit 26 angebracht ist, zusammenarbeitet, wie dies in den Figuren 1, 2 und 8a zu sehen ist. Da die Kraftübertragung zu jeder der ersten und dritten Arbeitseinheiten 22, 26 im Wesentlichen auf dieselbe Weise mit einem ähnlich konstruierten Aufbau erfolgt, wird nur derjenige Aufbau detailliert beschrieben werden, der die Antriebskraft zu der ersten und zweiten Arbeitseinheit 22, 24 überträgt und zu dieser gehört. In der bevorzugten Ausführungsform ist eine Anordnung von Zugmittelscheiben und Zugmitteln vorgesehen, die Arbeitskraft an die Arbeitsmittel der Arbeitseinheiten 22, 24, 26 in der oben und nachfolgend beschriebenen Weise übertragen. Jedoch sind ebenfalls Mechanismen, welche Ketten und Zahnräder oder ähnliche Anordnungen aufweisen, denkbar.

Wie es am deutlichsten in Figur 4 zu sehen ist, weist der Zugmitteltrieb 62 eine Schwenkarmanordnung 100 auf, die erste und zweite Schwenkarme 102, 104 und dritte und vierte Schwenkarme 106, 108 aufweist, welche entsprechend die dritte und vierte und fünfte und sechste Zugmittelscheibe 78, 80, 92, 94 oberhalb der schwenkbaren Verbindung der ersten und dritten Arbeitseinheit 22, 26 tragen.

Bezogen auf die erste und die zweite Arbeitseinheit 22, 24 weist die Schwenkarmanordnung 100 den ersten Schwenkarm 102 auf, der eine feste Länge besitzt, und der einen ersten Endbereich 114 aufweist, der schwenkbar an einer Halterung 116 befestigt ist, die an der zweiten oder mittleren Arbeitseinheit 24 angebracht ist. Ein zweiter Endbereich 118 des ersten Schwenkarms 102 ist schwenkbar mit einem Endbereich 121 des zweiten Schwenkarms 104 verbunden, der ebenfalls eine feste Länge aufweist. Der verbleibende Endbereich 122 des zweiten Schwenkarms 104 ist schwenkbar mit einer Halterung 124 verbunden, die an der Oberseite der ersten Arbeitseinheit 22 angeschweißt ist. Dieser verbleibende Endbereich 122 ist drehbar an einer Achse 126 befestigt, die sich durch die Halterung 124 hindurcherstreckt und mit dieser verbunden ist, siehe Figur 4.

Die dritte und vierte Zugmittelscheibe 78, 80, die für die Übertragung der Arbeitskraft von der Zapfwelle zu dem Getriebe 84, auf der ersten Arbeitseinheit 22, verantwortlich sind, werden entsprechend von den Endbereichen 118 und 121 des ersten bzw. des zweiten Schwenkarms 102 bzw. 104 gehalten. Insbesondere ist jede der Zugmittelscheiben 78, 80 auf einer Achse 127 angebracht, die sich durch die Endbereiche 118 und 121 erstreckt und dort befestigt ist, siehe Figur 4. Diese Zugmittelscheiben 78, 80 sind miteinander verbunden, um sich gemeinsam zu drehen. Dementsprechend sind auch die Zugmittelscheiben 92, 94 miteinander verbunden.

Von jedem der Arme 102 und 104, die schwenkbar mit der Achse 127 verbunden sind, kann gesagt werden, dass sie ein verlängertes bzw. längliches Element aufweisen. Dieses Element, das insbesondere in der Figur 4 dargestellt ist, trägt außerdem die Mittel, durch die Antriebskraft von einer Kraftquelle, wie der Zapfwelle, zu den Arbeitsmitteln 64 der seitlichen Arbeitseinheit 22 übertragen wird. Diese Mittel umfassen die übertragenden Zugmittelscheiben 78, 80, die von dem Mittelteil des Elements getragen werden und die Zugmittel 76 und 86, die mit diesen zusammenwirken.

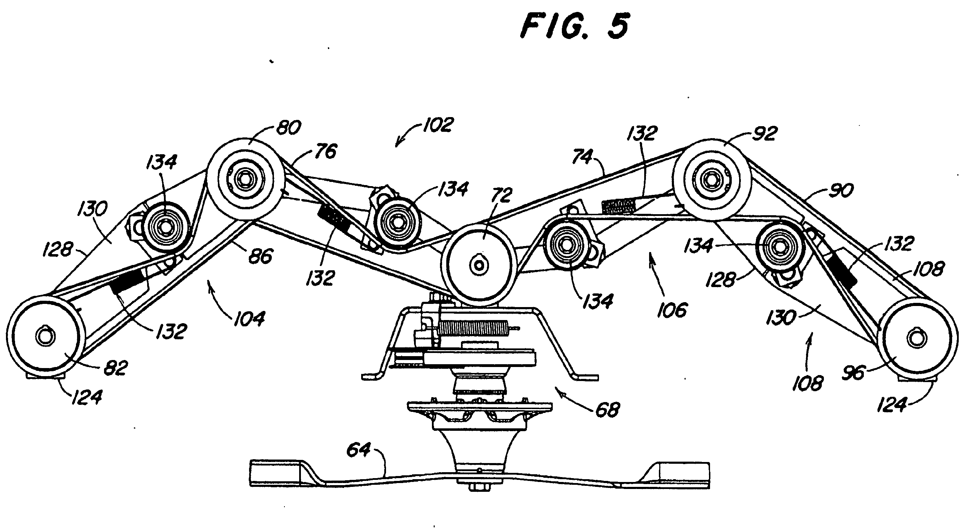

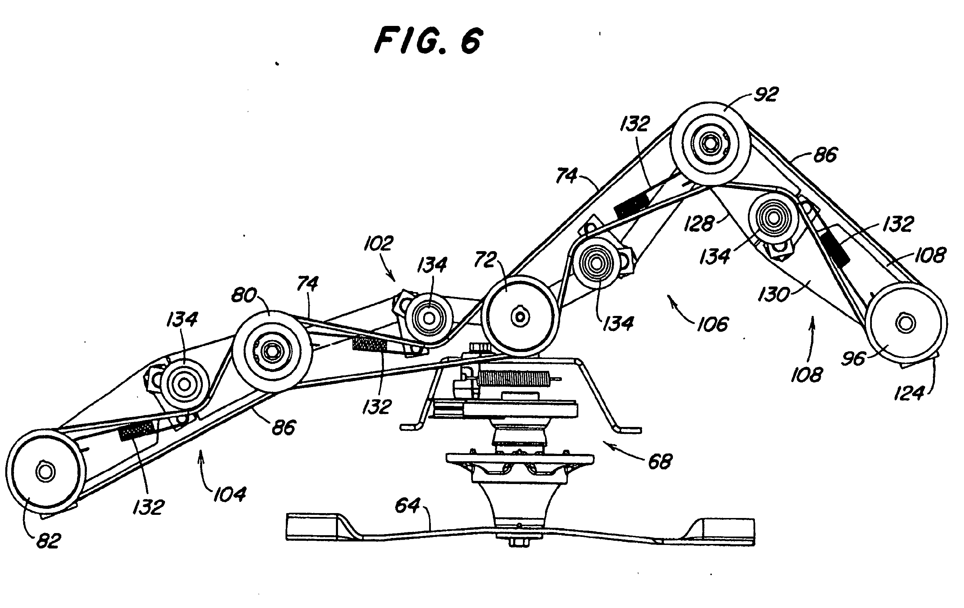

Um sich gegen eine Störung des Zugmitteltriebs zu schützen, wenn sich entweder die erste oder die dritte Arbeitseinheit 22, 26 hebt und in Kontakt mit niedrig liegendem Gestrüpp etc. gerät, sind die Schwenkarme 104 und 108, wie es in Figur 4 zu sehen ist, von Metallschutzen 128 umgeben. Falls es bevorzugt wird, können die Zugmittelscheiben und Zugmittel innerhalb einer geschlossenen Abdeckung untergebracht werden, um einem Eintritt von Ästen und/oder anderem Material in die Zugmittel und/oder in die Zugmittelscheiben vorzubeugen. Auf einer Rückseite 130 des Metallschutzes 128, wie es in den Figuren 5 bis 7 zu sehen ist, sind Spannrollen 132 angebracht, die an dem ersten und dem zweiten Zugmittel 76, 86 angreifen, um diese gespannt zu halten. Weiterhin sind Federn 134 vorgesehen, die mit den Schwenkarmen 102 und 104 verbunden sind, um eine ausreichende Kraft auf die Spannrollen 132 auszuüben und aufrechtzuerhalten, um so die Zugmittel 78, 86 richtig zu spannen, siehe die Figuren 5 und 6.

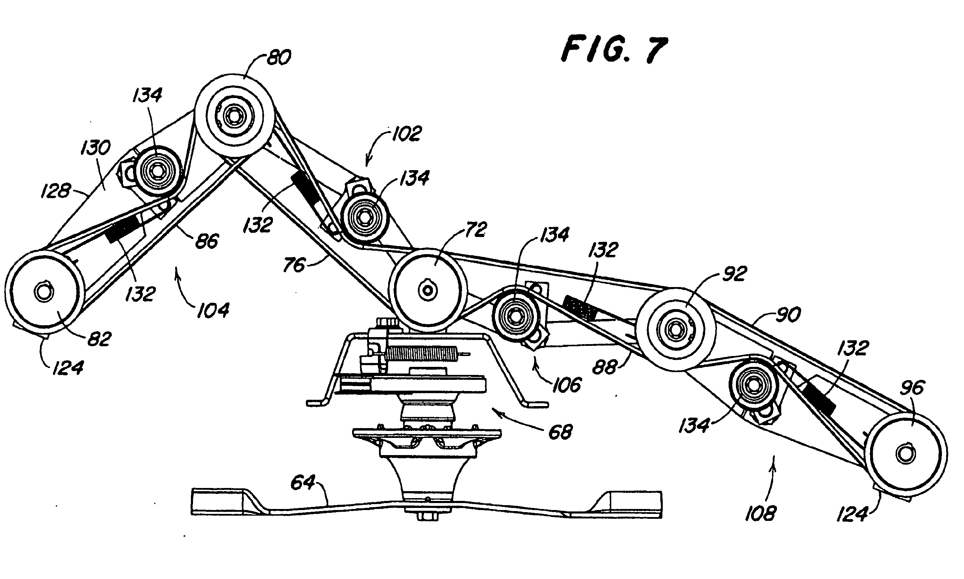

Die Figuren 8 und 8a illustrieren vereinfacht die Schwenkarmanordnung 100 der vorliegenden Erfindung, die es den um die Zugmittelscheiben 72, 78, 80, 82 geführten Zugmittel 76, 86 ermöglicht, mit Bezug zu diesen gerade ein- und auszutreten, wenn die Arbeitseinheit 22 relativ zu der zweiten oder mittleren Arbeitseinheit 24 verschwenkt. Die geradlinige Bewegung der Zugmittel 76, 86 in die und aus den Zugmittelscheiben 78, 80 wird durch die Anbringung der Zugmittelscheiben 78, 80 zwischen den Arbeitseinheiten 22, 24 und an den Schwenkarmen 102 und 104 ermöglicht. Wie es in den Figuren 6 und 7 durchwegs zu sehen ist, schwenken die Schwenkarme 102 und 104 ausgehend von einer Bewegung des Arbeitsgeräts 20 über einer unebenen Bodenoberfläche, um es so den Zugmittelscheiben 72, 78, 80 und 82 zu ermöglichen, um die Drehachsen A, in Fig. 8 gezeigt, zu rotieren, die parallel bleiben, wenn eine bestimmte Arbeitseinheit entweder nach oben oder unten schwenkt. Da eine Bewegung um die Drehachsen A erfolgt, wenn die Arbeitseinheit 22 verschwenkt, ist es den Zugmittel 76 und 86 erlaubt, in einer Linie mit den Nuten 142 der Zugmittelscheiben zu bleiben, wie dies in Figur 4 gezeigt wird. Entsprechend tritt jedes der Zugmittel 76, 86, das an den entsprechenden Zugmittelscheiben angebracht ist, sanft ein und aus und bleibt währenddessen im Wesentlichen unbeeinflusst von der Größe der Verschwenkung, die zwischen jeder der angrenzenden Arbeitseinheiten auftritt.

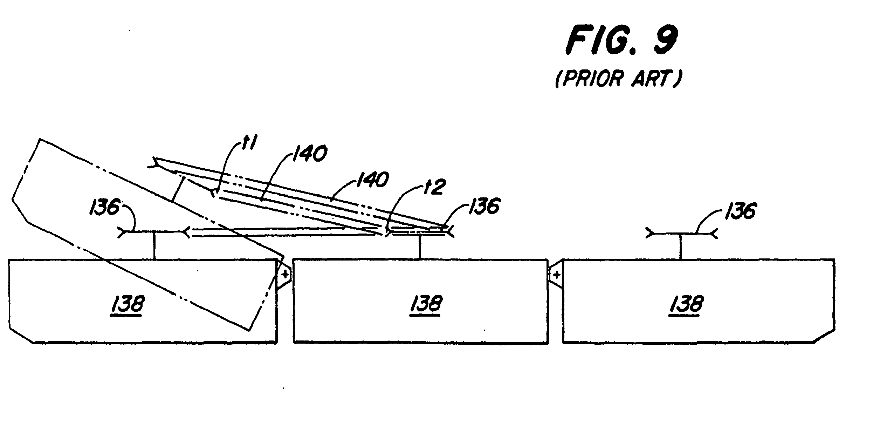

Im Gegensatz dazu weisen dem Stand der Technik entsprechende Anordnungen eine Befestigung aller verwendeten Zugmittelscheiben 136 an einer Oberseite der angrenzenden Arbeitseinheiten 138 entsprechend Figur 9 auf, so dass die Zugmittelscheiben im Wesentlichen in horizontalen Ebenen rotieren. Diese Art der Befestigung führt dazu, dass die Zugmittel 140, die um die Zugmittelscheiben 136 geführt sind, sich verwinden und verdrehen, während sie in diese Zugmittelscheiben 136 ein- und austreten, siehe Figur 9 bei t1 und t2.

Darüber hinaus ist, da jeweils der erste und der zweite Schwenkarm 102, 104 im Wesentlichen von bestimmter und gleicher Länge ist, der Abstand zwischen jeder der Zugmittelscheiben 72 und 78 und 80 und 82 im Wesentlichen derselbe. Daher bleibt die Drehachse der Zugmittelscheiben 78, 80 im Wesentlichen oberhalb der Schwenkachse zwischen den angrenzenden Arbeitseinheiten 22, 24. Ein zusätzlicher Vorteil der zwei Schwenkarme, die eine schwenkbare Verbindung besitzen, besteht darin, dass die um die Zugmittelscheiben geführten Zugmittel 76 und 86 ihre ursprüngliche Länge beibehalten, woraus sich eine höhere Betriebssicherheit des Arbeitsgeräts 20 ergibt, da es unwahrscheinlich ist, dass die Zugmittel 76, 86 aus den Nuten 142 der Zugmittelscheiben rutschen. Während die bevorzugte Ausführungsform die Verwendung eines ersten und eines zweiten Schwenkarms im Wesentlichen gleicher Länge bevorzugt, können sich diese in ihrer Länge auch unterscheiden, wenn Breiten und Anordnung der angrenzenden Arbeitseinheiten variiert werden.

Während die vorliegende Erfindung in Zusammenhang mit einer bestimmten Ausführungsform beschrieben wurde, ist es selbstverständlich, dass viele Alternativen, Abwandlungen und Veränderungen der vorhergehenden Beschreibung für den Fachmann offensichtlich sind. Dementsprechend ist es beabsichtigt, dass diese Erfindung all solche Alternativen, Abwandlungen und Veränderungen einbezieht, die in den Geist und den Schutzbereich der angefügten Ansprüche fallen.

## Patentansprüche

1. Arbeitsgerät (20) mit wenigstens zwei sich auf dem Untergrund abstützenden Arbeitseinheiten (22, 24, 26), welche um Schwenkachsen schwenkbar miteinander verbunden sind und welche jeweils wenigstens ein Arbeitsmittel (64) aufweisen, und mit einem Zugmitteltrieb (62) zum Antrieb der Arbeitsmittel (64) mit mehreren um Drehachsen drehbaren Zugmittelscheiben (72, 74, 78, 80, 82, 92, 94, 96), um welche wenigstens ein endloses Zugmittel (76, 86, 88, 90) geführt wird, **dadurch gekennzeichnet, dass** die Drehachsen (A) der Zugmittelscheiben (72, 74, 78, 80, 82, 92, 94, 96) zumindest im Wesentlichen parallel zu den Schwenkachsen angeordnet sind.

2. Arbeitsgerät nach Anspruch 1, **dadurch gekennzeichnet, dass** die Zugmittelscheiben (72, 74, 78, 80, 82, 92, 94, 96) mit den Arbeitsmitteln (64) über Getriebe (66, 84, 98) verbunden sind.

3. Arbeitsgerät nach Anspruch 2, **dadurch gekennzeichnet, dass** die Getriebe (66, 84, 98) als Winkelgetriebe ausgebildet sind.

4. Arbeitsgerät nach einem oder mehreren der vorherigen Ansprüche, **gekennzeichnet durch** wenigstens eine an dem Zugmittel (76, 86, 88, 90) angreifende, federbelastete Spannscheibe (134).

5. Arbeitsgerät nach einem oder mehreren der vorherigen Ansprüche, **gekennzeichnet durch** schwenkbar verbundene Schwenkarme (102, 104, 106, 108), welche einenends mit einer jeweiligen Arbeitseinheit (22, 24, 26) und andernends mit einem entsprechenden weiteren Schwenkarm (102, 104, 106, 108) um eine Schwenkachse schwenkbar verbunden sind, wobei die Schwenkachsen zumindest im Wesentlichen parallel zu den Schwenkachsen der Arbeitseinheiten (22, 24, 26) angeordnet sind.

6. Arbeitsgerät nach Anspruch 5, **dadurch gekennzeichnet, dass** die Zugmittelscheiben (72, 74, 78, 80, 82, 92, 94, 96) in entsprechenden Endbereichen der Schwenkarme (102, 104, 106, 108) vorgesehen sind.

7. Arbeitsgerät nach Anspruch 6, **dadurch gekennzeichnet, dass** die den Getrieben (84, 98) abgelegenen Endbereiche der Schwenkarme (102, 104, 106, 108) jeweils zwei Zugmittelscheiben (78, 80, 92, 94) tragen, welche gemeinsam rotieren, wobei jeweils ein Zugmittel (76, 86, 88, 90) um jeweils eine dieser Zugmittelscheiben (74, 80, 92, 94) sowie eine mit dem Getriebe (84, 98) verbundene Zugmittelscheibe (82, 96) geführt ist

8. Arbeitsgerät nach einem oder mehreren der Ansprüche 5 bis 7, **dadurch gekennzeichnet, dass** die Schwenkarme (102, 104, 106, 108) zumindest im Wesentlichen gleich lang ausgebildet sind.

9. Arbeitsgerät nach einem oder mehreren der Ansprüche 5 bis 7, **dadurch gekennzeichnet, dass** die Schwenkarme (102, 104, 106, 108) unterschiedlich lang ausgebildet sind.

10. Arbeitsgerät nach einem oder mehreren der vorherigen Ansprüche, wobei das Arbeitsgerät (20) in der Art eines Mähwerks und die Arbeitseinheiten (22, 24, 26) in der Art von jeweils ein als Mähmesser ausgebildetes Arbeitsmittel (64) aufweisenden Mäheinheiten ausgebildet ist.

## Claims

1. A working implement (20) with at least two working units (22, 24, 26) which are supported on the ground, are pivotally attached to each other about pivotal axes and each comprise at least one working means (64), and with a tension means drive (62) for driving the working means (64) with a plurality of pulleys (72, 74, 78, 80, 82, 92, 94, 96) rotatable about axes of rotation and around which at least one endless means (76, 86, 88, 90) acting in tension is guided, **characterized in that** the axes of rotation (A) of the pulleys (72, 74, 78, 80, 82, 92, 94, 96) are arranged at least substantially parallel to the pivotal axes.

2. A working implement according to claim 1, **characterized in that** the pulleys (72, 74, 78, 80, 82, 92, 94, 96) are connected to the working means (64) through gearboxes (66, 84, 98).

3. A working implement according to claim 2, **characterized in that** the gearboxes (66, 84, 98) are in the form of angle gears.

4. A working implement according to one or more of the preceding claims, **characterized by** at least one spring biased tensioning wheel engaging on the endless means (76, 86, 88, 90).

5. A working implement according to one or more of the preceding claims, **characterized by** pivotally connected swinging arms (102, 104, 106, 108) which are pivotally attached about pivotal axes at one end to respective working units (22, 24, 26) and at the other end to corresponding further swinging arms (102, 104, 106, 108), wherein the pivotal axes are at least substantially parallel to the pivotal axes of the working units (22, 24, 26).

6. A working implement according to claim 5, **characterized in that** the pulleys (72, 74, 78, 80, 82, 92, 94, 96) are provided at corresponding end regions of the swinging arms (102, 104, 106, 108).

7. A working implement according to claim 6, **characterized in that** the end regions of the swinging arms (102, 104, 106, 108) remote from the gearboxes (84, 98) each carry two pulleys (78, 80, 92, 94) which rotate together, wherein in each case an endless means (76, 86, 88, 90) is passed round around a respective one of these pulleys (78, 80, 92, 94) as well as a pulley (82, 96) connected to the gearbox (84, 98).

8. A working implement according to one or more of claims 5 to 7, **characterized in that** the swinging arms (102, 104, 106, 108) are at least substantially of the same length.

9. A working implement according to one or more of claims 5 to 7, **characterized in that** the swinging arms (102, 104, 106, 108) are of different lengths.

10. A working implement according to one or more of the preceding claims, wherein the working implement (20) is in the form of a mower mechanism and the working units (22, 24, 26) are each in the form of a mower unit comprising working means (64) formed as mower blades.

## Revendications

1. Machine de travail (20) comportant au moins deux unités de travail (22, 24, 26) en appui sur le sol, lesquelles sont assemblées entre elles de manière pivotante autour d'axes de pivotement et lesquelles comportent chacune au moins un moyen de travail (64), et comportant un mécanisme d'entraînement (62) destiné à actionner le moyen de travail (64) et comportant une pluralité de poulies de transmission (72, 74, 78, 80, 82, 92, 94, 96), qui sont montées rotatives autour d'axes de rotation et autour desquelles est guidée au moins une courroie continue (76, 86, 88, 90), **caractérisée en ce que** les axes de rotation (A) des poulies de transmission (72, 74, 78, 80, 82, 92, 94, 96) sont agencés au moins sensiblement parallèlement aux axes de pivotement.

2. Machine de travail selon la revendication 1, **caractérisée en ce que** les poulies de transmission (72, 74, 78, 80, 82, 92, 94, 96) sont reliées à des moyens de travail (64) par l'intermédiaire d'engrenages (66, 84, 98).

3. Machine de travail selon la revendication 2, **caractérisée en ce que** les engrenages (66, 84, 98) sont réalisés sous forme d'engrenages coniques.

4. Machine de travail selon une ou plusieurs des revendications précédentes, **caractérisée par** au moins une poulie de tension (134) sollicitée par ressort, entrant en prise avec la courroie de transmission (76, 86, 88, 90).

5. Machine de travail selon une ou plusieurs des revendications précédentes, **caractérisée par** des bras pivotants (102, 104, 106, 108), qui sont montés pivotants et qui sont reliés de manière à pivoter autour d'un axe de pivotement par une extrémité avec une unité travail (22, 24, 26) correspondante et par l'autre extrémité avec un autre bras pivotant (102, 104, 106, 108) correspondant, les axes de pivotement étant agencés sensiblement parallèlement aux unités de travail (22, 24, 26).

6. Machine de travail selon la revendication 5, **caractérisée en ce que** les poulies de transmission (72, 74, 78, 80, 82, 92, 94, 96) sont prévues dans des zones d'extrémité correspondantes des bras pivotants (102, 104, 106, 108).

7. Machine de travail selon la revendication 6, **caractérisée en ce que** les zones d'extrémité des bras pivotants (102, 104, 106, 108), détournées des engrenages (84, 98), portent chacune deux poulies de transmission (78, 80, 92, 94), qui tournent conjointement, chaque moyen de transmission (74, 86, 88, 90) étant guidé autour d'une de ces poulies de transmission (78, 80, 92, 94), ainsi qu'autour d'une poulie de transmission (82, 96) reliée à l'engrenage (84, 98).

8. Machine de travail selon une ou plusieurs des revendications 5 à 7, **caractérisée en ce que** les bras pivotants (102, 104, 106, 108) sont réalisés au moins sensiblement avec la même longueur.

9. Machine de travail selon une ou plusieurs des revendications 5 à 7, **caractérisée en ce que** les bras pivotants (102, 104, 106, 108) sont réalisés avec des longueurs différentes.

10. Machine de travail selon une ou plusieurs des revendications précédentes, la machine de travail (20) étant conçue sous forme de mécanisme de coupe et les unités de travail (22, 24, 26) étant réalisées sous forme d'unités de coupe comportant chacune un moyen de travail (64) conçu sous forme de lame de coupe.
